# EUROPEAN PATENT SPECIFICATION

(11) **EP 4 434 853 B1**
(45) Date of publication and mention of the grant of the patent: **25.11.2026**
(21) Application number: 24150130.3
(22) Date of filing: 02.01.2024
(51) Int. Cl.: B62D 25/08

(54) **VEHICLE STRUCTURE**
FAHRZEUGAUFBAU
STRUCTURE DE VÉHICULE

(30) Priority: 20.03.2023 JP 2023044558
(43) Date of publication of application: 25.09.2024
(73) Proprietor: Suzuki Motor Corporation, Shizuoka 432-8611 (JP)
(72) Inventor: TSUJIMOTO, Masayuki, Hamamatsu-shi,, 432-8611 (JP)
(74) Representative: Plasseraud IP

(56) References cited:
- US-B2- 8 882 184
- US-B2- 9 545 950

## Description

### [Technical Field]

The present invention relates to a vehicle structure including a dash panel and floor side members.

### [Background Art]

In vehicle width direction outer side portions of the lower surface of a floor panel of a vehicle, floor side members extending in the vehicle front-rear direction and constituting a part of a vehicle body frame are disposed. The floor side members extend in the vehicle front-rear direction and have particularly high strength against an input load in the axial direction of the floor side members.

As an example of the vehicle structure including the floor side members described above, a structure disclosed in Patent Literature 1 is known. In the structure in this example, a first front side member is provided, in the vehicle front of side members functioning as the floor side members, coaxially with the side members and projects forward, and furthermore, a second front side member projects to the vehicle front on the vehicle width direction outer side of the first front side member. With this configuration, even in a vehicle having a short crush stroke of a vehicle front portion, the front side members of the vehicle front portion are each compressed and deformed in the axial direction to be able to absorb, with a short stroke, collision energy due to front collision or the like.

Another vehicle structure is disclosed in US 9 545 950 B2. Document US 9 545 950 B2 discloses a vehicle structure including: a dash panel provided in a vehicle front portion; and a floor side member provided in a vehicle width direction outer side portion of a lower surface of a floor panel of a vehicle and extending in a vehicle front-rear direction, comprising a dash side frame extending to a vehicle front from the dash side panel and located further on an outer side than the floor side member in a vehicle width direction.

### [Citation List]

### [Patent Literature]

[Patent Literature 1] JP 2005-001406 A

### [Summary of Invention]

### [Problems to be Solved by the Invention]

However, in the structure disclosed in Patent Literature 1, in a collision such as offset collision in which obstacles in front of the vehicle collide with the vehicle front portion, parts of the obstacles are crushed at the front ends of small areas of the front side members projecting to the vehicle front and, thereafter, the remaining portions of the obstacles directly enter the vehicle body. Therefore, in the collision such as the offset collision, it is likely that collision energy can be input to the vehicle body while energy absorption remains insufficient, and there is room of improvement.

Therefore, an object of the present invention is to provide a vehicle structure that can effectively reduce collision energy input to a vehicle body in collision such as front collision.

### [Means for Solving the Problems]

In order to achieve the object described above, according to an aspect of the present invention, there is provided a vehicle structure including: a dash panel provided in a vehicle front portion; and a floor side member provided in a vehicle width direction outer side portion of a lower surface of a floor panel of a vehicle and extending in a vehicle front-rear direction. The vehicle structure includes: a dash side panel extending in the vehicle front-rear direction from a vehicle width direction outer side portion of the dash panel; a dash side frame extending to a vehicle front from the dash side panel and located further on an outer side than the floor side member in a vehicle width direction; a longitudinal member covering a front end of the floor side member from a front and extending in a vehicle up-down direction; an extension frame extending forwardly downward from the dash side frame to a position separated to a vehicle width direction outer side with respect to the longitudinal member; and a shield wall member having a front surface extending from the extension frame to the longitudinal member and facing the vehicle front, the shield wall member being joined to the extension frame and the longitudinal member.

### [Advantageous Effects of Invention]

According to the present invention, it is possible to provide a vehicle structure that can effectively reduce collision energy input to a vehicle body in a collision such as a front collision.

### [Brief Description of Drawings]

[Figure 1] Figure 1 is a perspective view of a vehicle structure according to an embodiment of the present invention.
[Figure 2] Figure 2 is a perspective view of the vehicle structure viewed from another angle.
[Figure 3] Figure 3 is a main part enlarged view of a cut model of the vehicle structure.
[Figure 4] Figure 4 is a schematic sectional view in an A-A sectional position shown in Figure 1.
[Figure 5] Figure 5 is a partially enlarged side view of the vehicle structure.

### [Mode for Carrying Out the Invention]

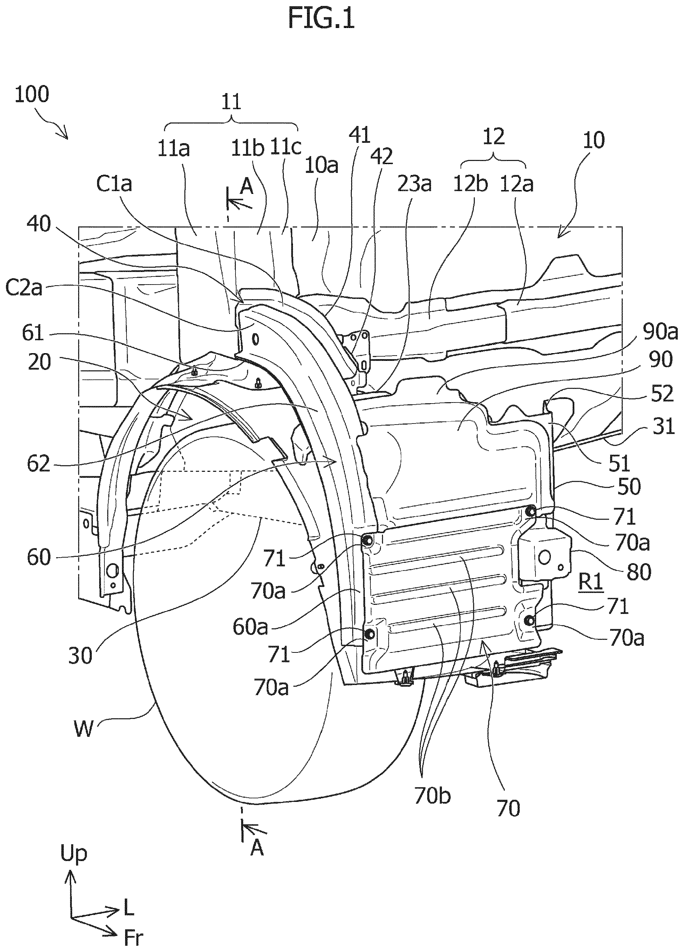

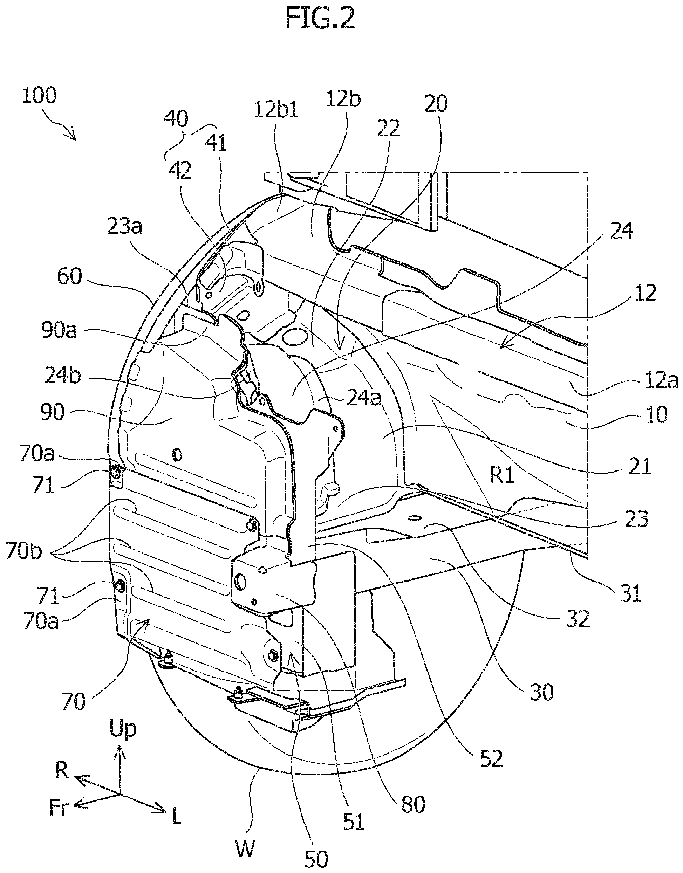

An embodiment of the present invention is described below with reference to the accompanying drawings. Figure 1 and Figure 2 are diagrams for describing a vehicle structure 100 according to the embodiment of the present invention. Figure 1 is a perspective view viewed from the vehicle front. Figure 2 is a perspective view viewed from the vehicle front at another angle. Note that, in the figures, an arrow Fr direction indicates the front in the vehicle front-rear direction and an arrow U direction indicates the vehicle upward direction in the vehicle up-down direction. "A front portion (a front end) and a rear portion (a rear end)" in the description of the embodiment correspond to a front portion and a rear portion in the vehicle front-rear direction. Arrows L and R directions indicate the left side and the right side in the vehicle width direction. "Left and right" in the description of this embodiment correspond to the left and the right at the time when an occupant in a vehicle interior faces the vehicle front.

As shown in Figure 1 and Figure 2, the vehicle structure 100 in this embodiment is mainly applied to a vehicle front portion and a vehicle bottom portion. Although not particularly limited, in this embodiment, a vehicle to which the vehicle structure 100 is applied is a small vehicle having a relatively short dimension in the vehicle front-rear direction of the vehicle front portion (specifically, a portion from a dash panel 10 described below to a front bumper, not shown). Note that, in the figures, a portion including a right front wheel of the vehicle in the vehicle structure 100 is shown. A portion including a left front wheel of the vehicle structure 100 is the same structure as the portion including the right front wheel except that the portion including the left front wheel is symmetrical with respect to the portion including the right front wheel. Illustration of the portion including the left front wheel is omitted.

In this embodiment, the vehicle to which the vehicle structure 100 is applied is an electric vehicle. For example, a battery, not shown, and as electric motor, not shown, for vehicle traveling are mounted on the vehicle. The electric motor operates with electric power supplied from the battery. When an electric vehicle and an engine driven vehicle are compared, the electric vehicle is generally heavier than the engine driven vehicle if vehicle sizes are the same.

Referring to Figure 1 and Figure 2, the vehicle structure 100 in this embodiment includes a dash panel 10, a dash side panel 11, a dash cross member 12, a wheelhouse 20, a floor side member 30, and a dash side frame 40.

The dash panel 10 is provided in a vehicle front portion. The dash panel 10 is, for example, a panel material partitioning a front unit compartment R1 and an occupant compartment and generally extends in the vehicle width direction and the vehicle up-down direction. In the front unit compartment R1, driving devices such as an engine and an electric motor (in this embodiment, the electric motor) and the like are disposed. An upper portion of a portion including a vehicle width direction outer side portion of the dash panel 10 constitutes a retracting part 10a bent to retract to the vehicle rear.

The front unit compartment R1 is called a power unit compartment as well and is formed mainly by the dash panel 10, a front bumper extending in the vehicle width direction at the not-shown vehicle front end and a not-shown front hood extending from the upper end portion of the dash panel 10 to the upper end portion of the front bumper.

The dash side panel 11 is provided in the vehicle width direction outer side portion of the dash panel 10 and located above a front wheel W. The dash side panel 11 is a panel material joined to an upper side portion of the vehicle width direction outer side portion of the dash panel 10 and extends in the vehicle front-rear direction from the vehicle width direction outer side portion of the dash panel 10.

The dash side panel 11 includes a first side panel part 11a joined to the vehicle width direction outer side portion of the dash panel 10 and facing the vehicle width direction outer side, a second side panel part 11b generally projecting to the vehicle width direction inner side from the front end of the first side panel part 11a and facing the vehicle front side, and a third side panel part 11c projecting to the vehicle front from the vehicle width direction inner end of the second side panel part 11b and facing the vehicle width direction outer side. The second side panel part 11b is inclined such that the inner end of the second side panel part 11b is located further in the vehicle front than the outer end of the second side panel part 11b in the vehicle width direction. The second side panel part 11b and the third side panel part 11c are located further in the vehicle front than the retracting part 10a of the dash panel 10.

The dash cross member 12 is joined to the intermediate portion in the vehicle up-down direction on the front surface of the dash panel 10. The dash cross member 12 includes a cross member main body part 12a and a cross member outer side part 12b. The cross member main body part 12a has a hat-like cross section and extends in the vehicle width direction along the front surface of the dash panel 10. The cross member outer side part 12b is formed integrally with the cross member main body part 12a and continues from a vehicle width direction outer side portion of the cross member main body part 12a and extends to the vicinity of the vehicle width direction outer side portion of the dash panel 10. The cross member outer side part 12b is generally formed in an L shape in plan view viewed from the vehicle up-down direction and formed to extend along the retracting part 10a of the dash panel 10. A vehicle width direction outer side portion of the cross member outer side part 12b is opened to the vehicle width direction outer side.

The wheelhouse 20 is a panel material covering the front wheel W of the vehicle from above and is joined to a lower side portion in the vehicle width direction outer side portion of the dash panel 10. In this embodiment, the wheelhouse 20 includes a wheelhouse main body panel 21, a strut tower 22, and a wheelhouse extension panel 23.

The wheelhouse main body panel 21 constitutes a most portion of the wheelhouse 20 and is formed to expand toward the vehicle width direction inner side and the vehicle upward direction in a shape generally adjusted to the outer shape of the front wheel W.

The strut tower 22 is a structure including a panel material for attaching an upper portion of a strut (not shown) extending in the vehicle up-down direction of a strut-type front suspension device (not shown). The strut tower 22 is formed integrally with the wheelhouse main body panel 21.

In this embodiment, the strut tower 22 is disposed in the rear with respect to the dash panel 10. That is, the vehicle to which the vehicle structure 100 in this embodiment is applied is a vehicle in which the strut tower 22 is located behind the dash panel 10 and the distance between the dash panel 10 and the vehicle front end (the front bumper) is markedly short. Therefore, among small vehicles, the vehicle is a small vehicle in which a dimension in the front-rear direction of a vehicle front portion is markedly short and a space in the front-rear direction of the front unit compartment R1 is narrow. In the vehicle, in relation with the axle of the front wheel W, for example, the dash panel 10 is located in the front with respect to the axle of the front wheel W in the vehicle front-rear direction and is disposed in a front-rear position between the axle of the front wheel W and the strut tower 22.

The wheelhouse extension panel 23 is a panel material extending the wheelhouse main body panel 21 forward and is joined to a front portion of the wheelhouse main body panel 21 and extends forward from the front portion. That is, the wheelhouse extension panel 23 is located in the front with respect to the dash panel 10 and covers an upward direction further in a front side portion than the axle of the front wheel W.

A lower portion of the vehicle width direction outer side portion of the dash panel 10 is joined to a portion between the strut tower 22 and the wheelhouse extension panel 23 on the upper surface of the wheelhouse 20.

The floor side member 30 is a member having high rigidity constituting a part of a vehicle body frame in the bottom portion of the vehicle body. The floor side member 30 is provided in a vehicle width direction outer side portion of the lower surface of a floor panel 31 of the vehicle and extends in the vehicle front-rear direction. In other words, the floor side member 30 is disposed below the dash panel 10 and extends in the vehicle front-rear direction.

Referring to Figure 1 and Figure 2, the floor side member 30 extends from a position further in the front than the dash panel 10 to a position further in the rear than the dash panel 10 in the vehicle front-rear direction. Therefore, the floor side member 30 extends to cross the dash panel 10 in a plan view viewed from the vehicle up-down direction. A front portion of the floor side member 30 projects forward with respect to the dash panel 10 in a plan view viewed from the vehicle up-down direction.

The floor side member 30 has a concave cross section opened in the vehicle upward direction and extends in the vehicle front-rear direction in a sectional view orthogonal to an extending direction of the floor side member 30 (the vehicle front-rear direction, the longitudinal direction). A front upper cover 32 and a floor panel 31 are joined to an upper portion of the floor side member 30. An upper opening of the floor side member 30 is closed by the front upper cover 32 and the floor panel being joined to the upper portion of the floor side member 30 by spot welding or the like. Consequently, a substantially square (in other words, a substantially square cylinder) closed sectional structure is configured in a sectional view of the floor side member 30 orthogonal to the longitudinal direction.

The floor side member 30 is provided in each of a right side portion and a left side portion in the vehicle width direction on the lower surface of the floor panel 31. The floor side member 30 extends over the generally entire front-rear direction of the vehicle in the vehicle-front-rear direction.

The dash side frame 40 extends to the vehicle front from the dash side panel 11 and is located further on the outer side than the floor side member 30 in the vehicle width direction in a plan view viewed from the vehicle up-down direction. The dash side frame 40 is disposed above a vehicle width direction outer side portion of the wheelhouse 20. Specifically, the dash side frame 40 extends to the vehicle front from a front portion of the dash side panel 11 joined to the vehicle width direction outer side portion of the dash panel 10.

Here, in a collision, such as a front collision, in which obstacles in the front of the vehicle collide with the vehicle front portion or offset collision, if parts of the obstacles are crushed at the front ends of small areas of the floor side members 30 projecting to the vehicle front, the remaining portions of the obstacles directly enter the vehicle body. In such a form, in a collision such as a front collision, it is likely that collision energy will be input to the vehicle body while energy absorption remains insufficient. In contrast, the vehicle structure 100 according to this embodiment has the following structure.

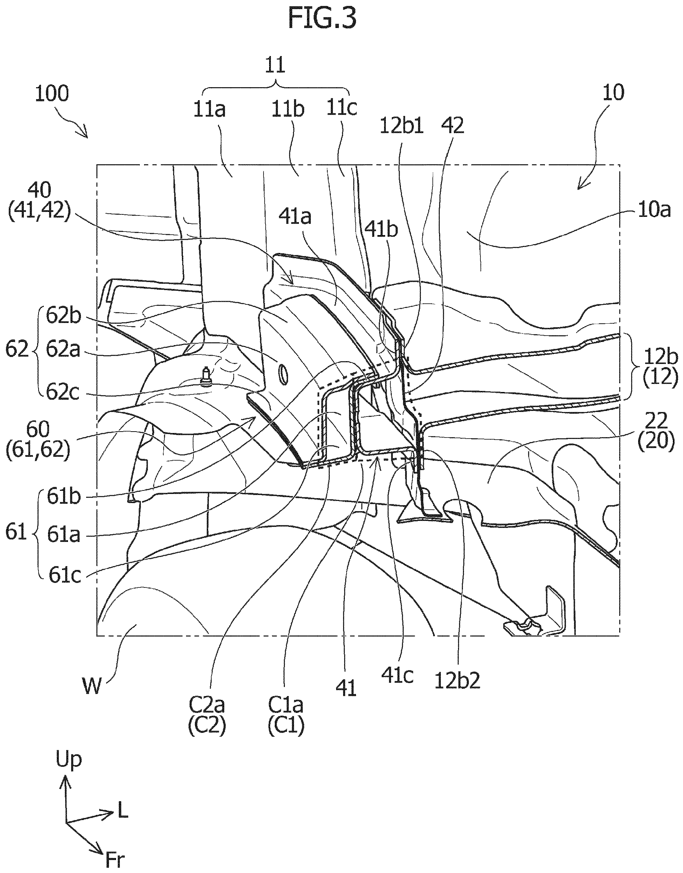

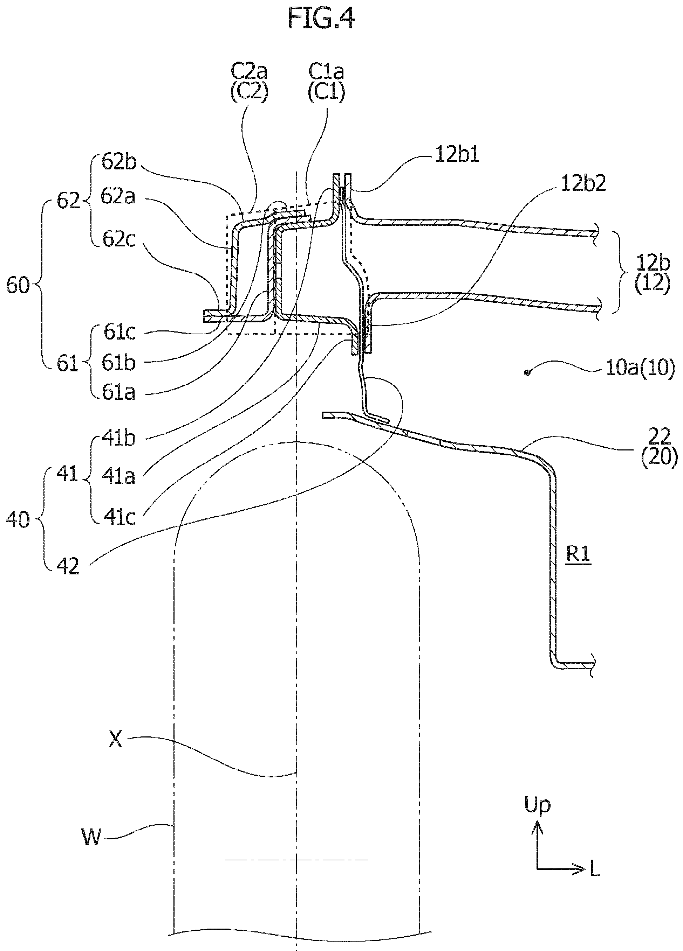

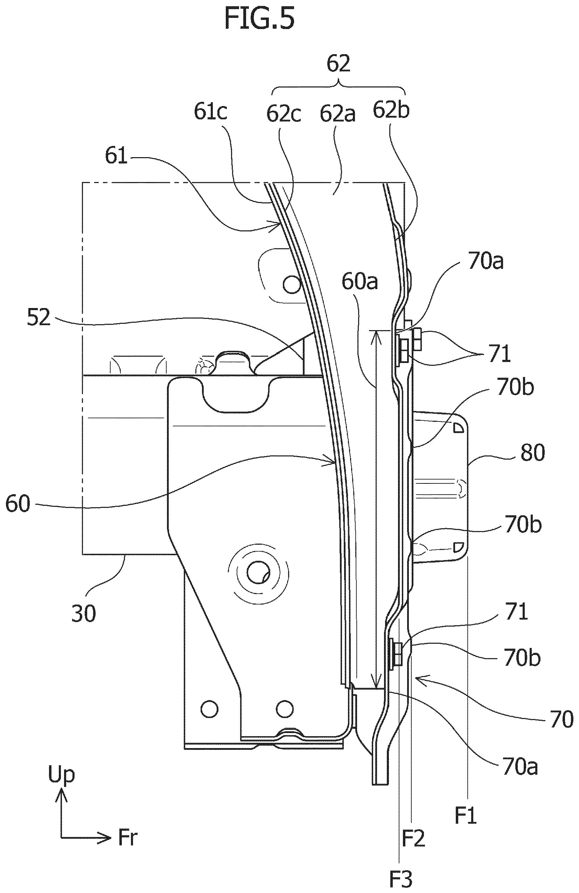

Next, a main part of the vehicle structure 100 is described in detail with reference to Figure 1 to Figure 5. Figure 3 is a main part enlarged view of a cut model of the vehicle structure 100. Figure 4 is a schematic sectional view in an A-A sectional position shown in Figure 1. Figure 5 is a partially enlarged side view of the vehicle structure 100.

The vehicle structure 100 in this embodiment includes a longitudinal member 50, an extension frame 60, and a shield wall member 70 in addition to the elements described above.

Referring to Figure 1 and Figure 2, the longitudinal member 50 is a panel material covering the front end of the floor side member 30 from the front and extending in the vehicle up-down direction. The longitudinal member 50 includes a front wall 51 facing the vehicle front and a flange wall 52 extending to the vehicle rear from a vehicle width direction outer side portion of the front wall 51 and joined to a sidewall in the vehicle width direction of the floor side member 30.

The longitudinal member 50 projects upward with respect to the upper end of the floor side member 30 and projects downward with respect to the lower end of the floor side member 30. The front wall 51 of the longitudinal member 50 is in contact with the front end of the floor side member 30. The flange wall 52 (see Figure 2) on the left side of the longitudinal member 50 is joined to the outer surface of a left side wall portion of the floor side member 30. A flange wall (in Figure 2, hidden behind a shield wall extension part 90) on the right side of the longitudinal member 50 is joined to the outer surface of a right side wall portion of the floor side member 30.

Referring to Figure 1 and Figure 3, the dash side frame 40 described above extends from a lower side front portion of the dash side panel 11 to the vehicle front. The dash side frame 40 in this example is inclined such that the front end of the dash side frame 40 is slightly further located in the vehicle downward direction than the rear end of the dash side frame 40 in the vehicle front-rear direction. The dash side frame 40 includes a dash side member 41 and a dash cross side panel 42, which are joined to each other.

The dash side member 41 is a member extending to the vehicle front from the dash side panel 11 and located further on the outer side than the floor side member 30 in the vehicle width direction. The dash side member 41 projects to the vehicle front along the inclined second side panel part 11b and the inclined third side panel part 11c, for example, in a lower portion of the dash side panel 11. Detailed structures such as a sectional shape of the dash side member 41 are described in detail below.

The dash cross side panel 42 is a panel material joined to a vehicle width direction outer side portion of the dash cross member 12 as shown in Figure 3. At the vehicle width direction outer side end of the cross member outer side part 12b, a cross member upper flange part 12b 1 extending in the vehicle upward direction and a cross member lower flange part 12b2 extending in the vehicle downward direction are provided. The dash cross side panel 42 covers a vehicle width direction outer side portion opening of the dash cross member 12 (the cross member outer side part 12b) by being joined to the cross member upper flange part 12b1 and the cross member lower flange part 12b2 by spot welding or the like.

The extension frame 60 is a member extending forwardly downward from the dash side frame 40 to a position separated to the vehicle width direction outer side with respect to the longitudinal member 50. That is, the lower end portion of the extension frame 60 is located in a position adjusted to a front-rear position of the longitudinal member 50 in the vehicle front-rear direction. The extension frame 60 curves in the vehicle downward direction toward the vehicle front and extends in an arcuate shape. Detailed structure such as a cross sectional shape of the extension frame 60 is described in detail below.

The shield wall member 70 is a panel material having a front surface extending from the extension frame 60 to the longitudinal member 50 and facing the vehicle front, the panel material being joined to the extension frame 60 and the longitudinal member 50. The shield wall member 70 has an area larger than an area in a plan view of the front end of the floor side member 30 and a shock absorbing member 80 described below viewed from the vehicle front. In this example, the shield wall member 70 extends in the vehicle width direction and the vehicle up-down direction and is formed in a generally square panel material. The shield wall member 70 closes a gap between an extension frame front part 60a, which is a front part extending in the vehicle downward direction of the extension frame 60 and is located on the vehicle width direction outer side with respect to the longitudinal member 50, and a generally lower half portion of the longitudinal member 50. A vehicle width direction outer side portion of the shield wall member 70 is joined, by bolts 71, to the front surface of the extension frame front part 60a of the extension frame 60. A vehicle width direction inner side portion of the shield wall member 70 is joined, by the bolts 71, to the front surface of a lower half portion of the front wall 51 of the longitudinal member 50. Note that the shield wall member 70 may be joined by welding such as spot welding in addition to the bolt joining or may be joined by welding instead of the bolt joining.

The shield wall member 70 has a front surface having a large area facing the vehicle front and opposed to the rear surface of the front bumper. A shield wall flange part 70a, in which bolt insertion holes are opened, is formed at each of approximately four corners of the shield wall member 70. The remaining portion other than the shield wall flange part 70a in the shield wall member 70 bulges to project to the vehicle front with respect to the shield wall flange part 70a as a whole. A plurality of (in this example, three) beads 70b separated from one another are formed in the portion swelled to the vehicle front in the shield wall member 70. The beads 70b extend in the vehicle width direction while having, for example, a sectional shape projecting to bulge to the vehicle front.

In this embodiment, the extension frame 60 is joined to an outer side portion in the vehicle width direction of the dash side frame 40 (in other words, the dash side member 41) and extends forwardly downward from the outer side portion to a position separate to the vehicle width direction outer side with respect to the longitudinal member 50. In other words, the extension frame 60 is offset to the outer side with respect to the dash side frame 40 in the vehicle width direction. The front end of the extension frame 60 is located further in the vehicle downward direction than the rear end of the extension frame 60 in the vehicle front-rear direction.

In this embodiment, a front side portion of the dash side frame 40 forms a first closed sectional structure C1 in a sectional view orthogonal to the extending direction of the dash side frame 40.

Specifically, the front side portion of the dash side member 41 is joined to a vehicle width direction outer side surface of the dash cross side panel 42 and forms a first closed sectional structure C1 in cooperation with the dash cross side panel 42. The dash side member 41 extends in the vehicle front-rear direction while having a hat-like cross section opened to the vehicle width direction inner side in a sectional view orthogonal to the extending direction of the dash side member 41 (the vehicle front-rear direction, the longitudinal direction). The dash side member 41 includes a side member main body part 41a, a side member upper flange part 41b, and a side member lower flange part 41c. The side member main body part 41a extends in the vehicle front-rear direction while having a concave cross section opened to the vehicle width direction inner side in the sectional view orthogonal to the extending direction. The side member upper flange part 41b projects in the vehicle upward direction from the vehicle width direction inner end of an upper side wall of the side member main body part 41a. The side member lower flange part 41c projects in the vehicle downward direction from the vehicle width direction inner end of a lower side wall of the side member main body part 41a.

The front side portion of the dash side member 41 projects to the vehicle front with respect to the dash side panel 11. A side portion opening of a front side portion of the dash side panel 11 is covered by the side member upper flange part 41b and the side member lower flange part 41c being joined to the dash cross side panel 42 by spot welding or the like. Consequently, the front side portion of the dash side member 41 cooperates with the dash cross side panel 42 to form a substantially square (in other words, generally square cylinder) first closed sectional structure C1 in a sectional view of the dash side frame 40 orthogonal to the longitudinal direction.

The dash cross side panel 42 is held between the cross member upper flange part 12b1 and the cross member lower flange part 12b2 of the cross member outer side part 12b and the side member upper flange part 41b and the side member lower flange part 41c of the dash side member 41. The cross member upper flange part 12b1, the dash cross side panel 42, and the side member upper flange part 41b are joined in three layers. The cross member lower flange part 12b2, the dash cross side panel 42, and the side member lower flange part 41c are joined in three layers.

A vehicle width direction position of the dash cross side panel 42 is adjusted to a vehicle width direction position of the third side panel part 11c of the dash side panel 11. The dash cross side panel 42 is disposed in the vehicle front of the third side panel part 11c. In other words, the vehicle width direction outer side portion of the dash cross member 12 extends to the vehicle width direction position of the third side panel part 11c of the dash side panel 11 in the vehicle width direction. As shown in Figure 3, the lower end of the dash cross side panel 42 is joined to the upper surface of the wheelhouse 20.

In this embodiment, the extension frame 60 includes an inner side extension member 61 and an outer side extension member 62, which are joined to each other. The inner side extension member 61 is a member joined to an outer side surface of the vehicle width direction outer side of the dash side member 41. The outer side extension member 62 is joined to the inner side extension member 61 and forms a second closed sectional structure C2 in cooperation with the inner side extension member 61. The inner side extension member 61 is joined to the outer side extension member 62 from the vehicle downward direction. Each of the inner side extension member 61 and the outer side extension member 62 bends in the vehicle downward direction toward the vehicle front above the wheelhouse 20 and extends in an arcuate shape.

Specifically, the inner side extension member 61 includes, for example, an inner side longitudinal member 61a, an inner side upper flange part 61b, and an inner side lower flange part 61c and extends while having a Z-shaped cross section. The inner side longitudinal member 61a extends in the vehicle up-down direction. A rear side portion of the inner side longitudinal member 61a is joined to an outer side surface facing the vehicle width direction outer side of the side member main body part 41a. The inner side upper flange part 61b projects to the vehicle width direction inner side from the upper end of the inner side longitudinal member 61a. A rear side portion of the inner side upper flange part 61b is joined to the upper surface of the side member main body part 41a. The inner side lower flange part 61c projects to the vehicle width direction outer side from the lower end of the inner side longitudinal member 61a.

The outer side extension member 62 includes an outer side longitudinal member 62a, an outer side upper flange part 62b, and an outer side lower flange part 62c and extends while having a Z-shaped cross section. The outer side longitudinal member 62a extends in the vehicle up-down direction and is separated to the vehicle width direction outer side with respect to the inner side longitudinal member 61a. The outer side upper flange part 62b projects to the vehicle width direction inner side from the upper end of the outer side longitudinal member 62a. The vehicle width direction inner end of the outer side upper flange part 62b is joined to the inner side upper flange part 61b. The outer side lower flange part 62c projects to the vehicle width direction outer side from the lower end of the outer side longitudinal member 62a and is joined to the inner side lower flange part 61c. Consequently, the outer side extension member 62 cooperates with the inner side extension member 61 to form a substantially square (in other words, a generally square cylinder) second closed sectional structure C2 in a sectional view orthogonal to the extending direction of the extension frame 60.

Referring to Figure 3, in this embodiment, a part of the first closed sectional structure C1, a part of the second closed sectional structure C2, and the dash cross member 12 line up adjacently in the vehicle width direction. The vehicle width direction outer side end of the cross member outer side part 12b, an inner side joining part C1a overlapping the vehicle width direction outer side end of the cross member outer side part 12b in the first closed sectional structure C1, and an outer side joining part C2a overlapping the inner side joining part C1a in the second closed sectional structure C2 overlap laterally side by side in the vehicle width direction.

Referring to Figure 4, in this embodiment, the dash side frame 40 (the dash side member 41) and the inner side joining part C1a of the first closed sectional structure C1 are located in a region crossing an imaginary plane X passing the center of the tire width direction of the front wheel W (in other words, right above the largest outer diameter portion of the front wheel W) above the front wheel W. On the other hand, the extension frame 60 is located on the vehicle width direction outer side with respect to the imaginary plane X. The outer diameter of the front wheel W is smaller toward the tire width direction outer side. Therefore, a gap between the front wheel W and the dash side frame 40 is narrower than a gap between the front wheel W and the extension frame 60. Note that, in Figure 4, the vehicle is shown in a suspended state and the vehicle including the front wheel W is floating in the air. The gap between the front wheel W and the dash side frame 40 is actually narrower than the gap shown in Figure 4. Therefore, if the extension frame 60 is directly extended forwardly downward from the front end of the dash side frame 40, in some cases, the extension frame 60 interferes with the front wheel W, making it difficult to dispose the extension frame 60. In this regard, the extension frame 60 is disposed so as not to interfere with the front wheel W, in a position offset to the vehicle width direction outer side with respect to the dash side frame 40 located right above the maximum outer diameter portion of the front wheel W.

The vehicle structure 100 in this embodiment further includes a shock absorbing member 80, a shield wall extension part 90, and a wheelhouse reinforcement 24.

The shock absorbing member 80 is a member joined to the front wall 51 of the longitudinal member 50 and projecting forward. The shock absorbing member 80 is disposed to cover the front end of the floor side member 30 in a plan view viewed from the vehicle front. The shock absorbing member 80 is formed by a panel material. The front bumper, not shown, extends in the vehicle width direction in the front of the shock absorbing member 80. The shock absorbing member 80 is opposed to the rear surface of the front bumper and supports the front bumper from the rear. A collision load in a front collision or the like is input to the shock absorbing member 80 via the front bumper.

Referring to Figure 5, in this embodiment, a front end F1 of the shock absorbing member 80 is located in the vehicle front with respect to a front end F2 of the shield wall member 70 and a front end F3 of the extension frame 60 is located in the vehicle rear with respect to the front end F2 of the shield wall member 70. Specifically, in this example, in a side view viewed from the vehicle width direction, the front surface, which is the front end F1, of the shock absorbing member 80 is located in the vehicle front with respect to the tops of the beads 70b, which are the front end F2 of the shield wall member 70, and the front surface of the extension frame front part 60a, which is the front end F3 of the extension frame 60, is located in the vehicle rear with respect to the tops of the beads 70b of the shield wall member 70.

The extension frame front part 60a extends in the vehicle up-down direction and supports a vehicle width direction outer side portion of the shield wall member 70 from the rear. The extension frame front part 60a is a portion in which a front portion extending in the vehicle downward direction of the outer side upper flange part 62b of the outer side extension member 62 and a front portion extending in the vehicle downward direction of the inner side upper flange part 61b of the inner side extension member 61 overlap.

The shield wall extension part 90 is a panel material joined to an upper portion of the shield wall member 70 and extending in the vehicle upward direction from the upper portion. The shield wall extension part 90 extends from the extension frame 60 to the longitudinal member 50 to close a gap between a bending portion above the extension frame front part 60a of the extension frame 60 and a portion of a generally upper half of the longitudinal member 50. A vehicle width direction inner side portion of the shield wall extension part 90 is joined to the front wall 51 of the longitudinal member 50. A vehicle width direction outer side portion of the shield wall extension part 90 is curved in a shape adjusted to a curving shape of the extension frame 60 and is joined to the outer side upper flange part 62b of the outer side extension member 62 of the extension frame 60. The wheelhouse extension panel 23 includes an extension panel flange part 23a joined to a shield wall extension flange part 90a formed in an upper portion of the shield wall extension part 90 and supports the shield wall extension part 90 from the rear.

The wheelhouse reinforcement 24 is a panel material extending from the upper surface of a front portion of the wheelhouse extension panel 23 to the upper portion of the shield wall extension part 90 and joined to the wheelhouse extension panel 23 and the shield wall extension part 90. The wheelhouse reinforcement 24 includes a lower flange part 24a joined to the upper surface of the wheelhouse extension panel 23 and an upper flange part 24b joined to the shield wall extension flange part 90a and supports the shield wall extension part 90 from the rear in conjunction with the wheelhouse extension panel 23.

In the vehicle structure 100 according to this embodiment, the dash side frame 40 extends to the vehicle front from the dash side panel 11 and is located further on the outer side than the floor side member 30 in the vehicle width direction, the longitudinal member 50 covers the front end of the floor side member 30 from the front and extends in the vehicle up-down direction, the extension frame 60 extends forwardly downward from the dash side frame 40 to the position separated to the vehicle width direction outer side with respect to the longitudinal member 50, and the shield wall member 70 has the front surface extending from the extension frame 60 to the longitudinal member 50 and facing the vehicle front and is joined to the extension frame 60 and the longitudinal member 50. Therefore, (1) a plane having a large area facing the vehicle front is easily formed by the front surface of the shield wall member 70 between the longitudinal member 50 covering the front end of the floor side member 30 having high strength and the extension frame 60 extending forwardly downward from the dash side frame 40. As a result, in a collision such as a front collision in which obstacles in front of the vehicle collide with the vehicle front portion, the obstacles are crushed in a wide range by the shield wall member 70. Therefore, a some of the collision energy due to a collision load is effectively absorbed as deformation energy of the obstacles. A collision load input to the vehicle body can be effectively reduced. (2) The vehicle width direction outer side portion of the shield wall member 70 is supported from the rear by the extension frame 60 extending to extend from the dash side frame 40. As a result, in a collision such as a front collision, the shield wall member 70 does not immediately retract, and deformation to the vehicle rear of the vehicle width direction outer side portion of the shield wall member 70 is reduced. That is, it is possible to easily impart, to the shield wall member 70, moderate strength that can crush obstacles in a wide range.

As described above, the vehicle structure 100 in this embodiment is a structure that can effectively reduce, in a collision such as a front collision, collision energy input to the vehicle body.

In this embodiment, the extension frame 60 is joined to an outer side portion in the vehicle width direction of the dash side frame 40 and extends from the outer side portion. Consequently, the extension frame 60 does not interfere with the front wheel W and can be easily extended forwardly downward from the dash side frame 40 to a position separated to the vehicle width direction outer side with respect to the longitudinal member 50.

In this embodiment, a part of the first closed sectional structure C1 of the front side portion of the dash side frame 40, a part of the second closed sectional structure C2 of the extension frame 60, and the dash cross member 12 line up adjacently in the vehicle width direction. Consequently, a part including a joining portion of the extension frame 60 and the dash side frame 40 is formed at extremely high strength. Rigidity against a collision load that can be input because of offset collision or the like can be effectively improved.

In this embodiment, the front end F1 of the shock absorbing member 80 is located in the vehicle front with respect to the front end F2 of the shield wall member 70 and the front end F3 of the extension frame 60 is located in the vehicle rear with respect to the front end F2 of the shield wall member 70. Consequently, the shock absorbing member 80 among the shock absorbing member 80, the shield wall member 70, and the extension frame 60 is deformed by a collision load due to front collision or the like earliest to absorb some of the collision energy. After the deformation of the shock absorbing member 80, the shield wall member 70 crushes obstacles, whereby an input load to the vehicle body decreases. Thereafter, the shield wall member 70 is deformed to absorb some of the collision energy. As a result, collision energy input to the extension frame 60 more susceptible to a collision load from the front compared with the shield wall member 70 can be reduced.

In this embodiment, the shield wall extension part 90 is joined to the upper portion of the shield wall member 70 and extends in the vehicle upward direction from the upper portion and the wheelhouse reinforcement 24 extends from the upper surface of the wheelhouse extension panel 23 to the upper portion of the shield wall extension part 90 and is joined to the wheelhouse extension panel 23 and the shield wall extension part. Consequently, some of the collision energy that can be input to the shield wall member 70 because of front collision or the like is effectively transmitted to the wheelhouse reinforcement 24 and the wheelhouse reinforcement 24 is deformed, whereby the collision energy is effectively absorbed. That is, the vehicle structure 100 in which collision energy that can be input from the front because of a front collision or the like is more effectively easily absorbed is constructed.

The inner side extension member 61 having the Z-shaped cross section and the outer side extension member 62 having the Z-shaped cross section are joined to each other, whereby the second closed sectional structure C2 of the extension frame 60 is formed. Consequently, even if the extension frame 60 is curved longer and larger compared with the dash side frame 40, moldability of the extension frame 60 is not deteriorated and the extension frame 60 having high rigidity can be easily formed. The sectional area of the extension frame 60 can also be easily changed according to necessity. It is easy to control a deformation mode of the extension frame 60 in a front collision or the like. By adopting a Z-shaped cross section as cross sections of the members (61, 62) of the extension frame 60, spot points of spot welding of the extension frame 60 and the dash side frame 40 can be easily set.

The embodiment of the present invention is described above. However, the present invention is not limited to the embodiment described above. Modifications and changes are possible based on the technical concept of the present invention.

### [Reference Signs List]

- 10: Dash panel
- 10a: Retracting part
- 11: Dash side panel
- 11a: First side panel part
- 11b: Second side panel part
- 11c: Third side panel part
- 12: Dash cross member
- 12a: Cross member main body part
- 12b: Cross member outer side part
- 12b1: Cross member upper flange part
- 12b2: Cross member lower flange part
- 20: Wheelhouse
- 21: Wheelhouse main body panel
- 22: Strut tower
- 23: Wheelhouse extension panel
- 23a: Extension panel flange part
- 24: Wheelhouse reinforcement
- 24a: Lower flange part
- 24b: Upper flange part
- 30: Floor side member
- 31: Floor panel
- 32: Front upper cover
- 40: Dash side frame
- 41: Dash side member
- 41a: Side member main body part
- 41b: Side member upper flange part
- 41c: Side member lower flange part
- 42: Dash cross side panel
- 50: Longitudinal member
- 51: Front wall
- 52: Flange wall
- 60: Extension frame
- 60a: Extension frame front part
- 61: Inner side extension member
- 61a: Inner side longitudinal member
- 61b: Inner side upper flange part
- 61c: Inner side lower flange part
- 62: Outer side extension member
- 62a: Outer side longitudinal member
- 62b: Outer side upper flange part
- 62c: Outer side lower flange part
- 70: Shield wall member
- 70a: Shield wall flange part
- 70b: Bead
- 71: Bolt
- 80: Shock absorbing member
- 90: Shield wall extension part
- 90a: Shield wall extension flange part
- 100: Vehicle structure
- C1: First closed sectional structure
- C2: Second closed sectional structure
- C1a: Inner side joining part
- C2a: Outer side joining part
- R1: Front unit compartment
- X: Imaginary plane
- W: Front wheel

## Claims

1. A vehicle structure (100) including: a dash panel (10) provided in a vehicle front portion; and a floor side member (30) provided in a vehicle width direction outer side portion of a lower surface of a floor panel (31) of a vehicle and extending in a vehicle front-rear direction,
the vehicle structure (100) comprising
a dash side panel (11) extending in the vehicle front-rear direction from a vehicle width direction outer side portion of the dash panel (10);
a dash side frame (40) extending to a vehicle front from the dash side panel (11) and located further on an outer side than the floor side member (30) in a vehicle width direction;
a longitudinal member (50) covering a front end of the floor side member (30) from a front and extending in a vehicle up-down direction;
an extension frame (60) extending forwardly downward from the dash side frame (40) to a position separated to a vehicle width direction outer side with respect to the longitudinal member (50); and
a shield wall member (70) having a front surface extending from the extension frame (60) to the longitudinal member (50) and facing the vehicle front, the shield wall member (70) being joined to the extension frame (60) and the longitudinal member (50).

2. The vehicle structure (100) according to claim 1, wherein the extension frame (60) is joined to an outer side portion in the vehicle width direction of the dash side frame (40) and extends from the outer side portion.

3. The vehicle structure (100) according to claim 1, further comprising a dash cross member (12) joined to a front surface of the dash panel (10) and extending in the vehicle width direction, wherein
a front side portion of the dash side frame (40) forms a first closed sectional structure (C1) in a sectional view orthogonal to an extending direction of the dash side frame (40),
the extension frame (60) forms a second closed sectional structure (C2) in a sectional view orthogonal to an extending direction of the extension frame (60), and
a part of the first closed sectional structure (C1), a part of the second closed sectional structure (C2), and the dash cross member (12) line up adjacently in the vehicle width direction.

4. The vehicle structure (100) according to claim 1, further comprising a shock absorbing member (80) joined to a front wall (51) of the longitudinal member (50) and projecting to a front, wherein
a front end of the shock absorbing member (80) is located in the vehicle front with respect to a front end of the shield wall member (50), and a front end of the extension frame (60) is located in a vehicle rear with respect to the front end of the shield wall member (50).

5. The vehicle structure (100) according to any one of claims 1 to 4, further comprising:
a shield wall extension part (90) joined to an upper portion of the shield wall member (70) and extending in a vehicle upward direction from the upper portion;
a wheelhouse extension panel (23) located in a front with respect to the dash panel (10); and
a wheelhouse reinforcement (24) extending from an upper surface of the wheelhouse extension panel (23) to the upper portion of the shield wall extension part (90) and joined to the wheelhouse extension panel (23) and the shield wall extension part (90).

## Patentansprüche

1. Fahrzeugstruktur (100), umfassend:
ein Stirnpaneel (10), welches in einem vorderen Fahrzeugabschnitt bereitgestellt ist; und ein Bodenseitenelement (30), welches in einem äußeren Seitenabschnitt in Fahrzeugbreitenrichtung einer unteren Fläche eines Bodenpaneels (31) eines Fahrzeugs vorgesehen ist und sich in einer Fahrzeug-Vorne-Hinten-Richtung erstreckt,
wobei die Fahrzeugstruktur (100) ferner umfasst:
ein Stirn-Seitenpanel (11), welches sich in der Fahrzeug-Vorne-Hinten-Richtung von einem äußeren Seitenabschnitt in Fahrzeugbreitenrichtung des Stirnpaneels (10) erstreckt;
einen Stirn-Seitenrahmen (40), welcher sich von dem Stirnwand-Seitenpanel (11) zu einer Fahrzeugvorderseite erstreckt und in einer Fahrzeugbreitenrichtung weiter auf einer Außenseite als der Bodenseitenträger (30) angeordnet ist;
ein Längselement (50), welches ein vorderes Ende des Bodenseitenelements (30) von vorne abdeckt und sich in einer Fahrzeug-Oben-Unten-Richtung erstreckt;
einen Erstreckungsrahmen (60), welcher sich von dem Stirn-Seitenrahmen (40) nach vorne unten zu einer Position erstreckt, welche zu einer Fahrzeugbreitenrichtung-Außenseite gegenüber dem Längselement (50) beabstandet ist; und
ein Schutzwandelement (70), welches eine Vorderfläche aufweist, welche sich von dem Erstreckungsrahmen (60) zu dem Längselement (50) erstreckt und der Fahrzeugvorderseite zugewandt ist, wobei das Schutzwandelement (70) mit dem Erstreckungsrahmen (60) und dem Längselement (50) verbunden ist.

2. Fahrzeugstruktur (100) nach Anspruch 1, wobei der Erstreckungsrahmen (60) mit einem äußeren Seitenabschnitt in der Fahrzeugbreitenrichtung des Stirn-Seitenrahmens (40) verbunden ist und sich von dem äußeren Seitenabschnitt erstreckt.

3. Fahrzeugstruktur (100) nach Anspruch 1, ferner umfassend ein Stirn-Querelement (12), welches mit einer Vorderfläche des Stirnpaneels (10) verbunden ist und sich in der Fahrzeugbreitenrichtung erstreckt, wobei
ein vorderer Seitenabschnitt des Stirn-Seitenrahmens (40) eine erste geschlossene Querschnittsstruktur (C1) in einer Querschnittsansicht orthogonal zu einer Erstreckungsrichtung des Stirn-Seitenrahmens (40) bildet,
der Erstreckungsrahmen (60) eine zweite geschlossene Querschnittsstruktur (C2) in einer Querschnittsansicht orthogonal zu einer Erstreckungsrichtung des Erstreckungsrahmens (60) bildet, und
ein Teil der ersten geschlossenen Querschnittsstruktur (C1), ein Teil der zweiten geschlossenen Querschnittsstruktur (C2) und das Stirn-Querelement (12) in der Fahrzeugbreitenrichtung nebeneinander angeordnet sind.

4. Fahrzeugstruktur (100) nach Anspruch 1, ferner umfassend ein Stoßdämpfungselement (80), welches mit einer Vorderwand (51) des Längselements (50) verbunden ist und nach vorne vorsteht, wobei
ein vorderes Ende des Stoßdämpfungselements (80) in der Fahrzeug-Vorderseite gegenüber einem vorderen Ende des Schutzwandelements (50) angeordnet ist, und ein vorderes Ende des Erstreckungsrahmens (60) in einer Fahrzeug-Hinterseite gegenüber dem vorderen Ende des Schutzwandelements (50) angeordnet ist.

5. Fahrzeugstruktur (100) nach einem der Ansprüche 1 bis 4, ferner umfassend:
ein Schutzwand-Erstreckungsteil (90), welches mit einem oberen Abschnitt des Schutzwandelements (70) verbunden ist und sich von dem oberen Abschnitt in einer Fahrzeugaufwärts-Richtung erstreckt;
ein Radhaus-Erstreckungspaneel (23), welches in einer Vorderseite gegenüber dem Stirnpaneel (10) angeordnet ist; und
eine Radhaus-Verstärkung (24), welche sich von einer Oberfläche des Radhaus-Erstreckungspaneels (23) zu dem oberen Abschnitt des Schutzwand-Erstreckungsteils (90) erstreckt und mit dem Radhaus-Erstreckungspaneel (23) und dem Schutzwand-Verlängerungsteil (90) verbunden ist.

## Revendications

1. Structure de véhicule (100) incluant : un panneau de tableau de bord (10) prévu dans une partie avant de véhicule ; et un organe latéral de plancher (30) prévu dans une partie latérale extérieure dans la direction de la largeur de véhicule d'une surface inférieure d'un panneau de plancher (31) d'un véhicule et s'étendant dans une direction avant-arrière de véhicule,
la structure de véhicule (100) comprenant :
un panneau latéral de tableau de bord (11) s'étendant dans la direction avant-arrière de véhicule à partir d'une partie latérale extérieure dans la direction de la largeur de véhicule du panneau de tableau de bord (10) ;
un cadre latéral de tableau de bord (40) s'étendant jusqu'à un avant de véhicule à partir du panneau latéral de tableau de bord (11) et situé plus loin sur un côté extérieur que l'organe latéral de plancher (30) dans une direction de largeur de véhicule ;
un organe longitudinal (50) recouvrant une extrémité avant de l'organe latéral de plancher (30) à partir d'un avant et s'étendant dans une direction haut-bas de véhicule ;
un cadre d'extension (60) s'étendant vers l'avant vers le bas à partir du cadre latéral de tableau de bord (40) jusqu'à une position séparée d'un côté extérieur dans la direction de la largeur de véhicule par rapport à l'organe longitudinal (50) ; et
un organe de paroi de protection (70) présentant une surface avant s'étendant à partir du cadre d'extension (60) jusqu'à l'organe longitudinal (50) et orientée vers l'avant du véhicule, l'organe de paroi de protection (70) étant relié au cadre d'extension (60) et à l'organe longitudinal (50).

2. Structure de véhicule (100) selon la revendication 1, dans laquelle le cadre d'extension (60) est relié à une partie latérale extérieure dans la direction de largeur de véhicule du cadre latéral de tableau de bord (40) et s'étend à partir de la partie latérale extérieure.

3. Structure de véhicule (100) selon la revendication 1, comprenant en outre une traverse de tableau de bord (12) reliée à une surface avant du panneau de tableau de bord (10) et s'étendant dans la direction de largeur de véhicule, dans laquelle
une partie latérale avant du cadre latéral de tableau de bord (40) forme une première structure en section fermée (C1) dans une vue en section orthogonale à une direction d'extension du cadre latéral de tableau de bord (40),
le cadre d'extension (60) forme une seconde structure en section fermée (C2) dans une vue en section orthogonale à une direction d'extension du cadre d'extension (60), et
une partie de la première structure en section fermée (C1), une partie de la seconde structure en section fermée (C2), et la traverse de tableau de bord (12) s'alignent de manière adjacente dans la direction de largeur de véhicule.

4. Structure de véhicule (100) selon la revendication 1, comprenant en outre un organe amortisseur (80) relié à une paroi avant (51) de l'organe longitudinal (50) et faisant saillie vers un avant, dans laquelle
une extrémité avant de l'organe amortisseur (80) est située dans l'avant de véhicule par rapport à une extrémité avant de l'organe de paroi de protection (50), et une extrémité avant du cadre d'extension (60) est située dans un arrière de véhicule par rapport à l'extrémité avant de l'organe de paroi de protection (50).

5. Structure de véhicule (100) selon l'une quelconque des revendications 1 à 4, comprenant en outre :
une partie d'extension de paroi de protection (90) reliée à une partie supérieure de l'organe de paroi de protection (70) et s'étendant dans un sens vers le haut de véhicule à partir de la partie supérieure ;
un panneau d'extension de passage de roue (23) situé à l'avant par rapport au panneau de tableau de bord (10) ; et
un renfort de passage de roue (24) s'étendant à partir d'une surface supérieure du panneau d'extension de passage de roue (23) jusqu'à la partie supérieure de la partie d'extension de paroi de protection (90) et relié au panneau d'extension de passage de roue (23) et à la partie d'extension de paroi de protection (90).
